# EUROPEAN PATENT APPLICATION

(11) **EP 4 492 787 A1**
(43) Date of publication of application: **15.01.2025**
(21) Application number: 23184340.0
(22) Date of filing: 10.07.2023
(51) Int. Cl.: H04N 19/46, H04N 19/597, H04N 19/70, H04N 21/422, H04N 21/4223, H04N 21/4402, H04N 21/81

(54) **CAPTURE DEVICE INFORMATION**

(71) Applicant: Koninklijke Philips N.V., 5656 AG Eindhoven (NL)
(72) Inventor: KROON, Bart, Eindhoven (NL); VAREKAMP, Christiaan, Eindhoven (NL)
(74) Representative: Philips Intellectual Property & Standards

(57) **Abstract**

Encoding, decoding and transformations on a data signal comprising one or more image frames with multiple video components, parameters of one or more views, parameters of one or more capture device models, wherein a region of an image frame is associated with a view, wherein a view is associated with a capture device model, wherein the capture device model comprises one or more optical sensors, and wherein an optical sensor is associated with a video component.

## Description

### FIELD OF THE INVENTION

The invention relates to the transmission of immersive video data with capture device information. The invention also relates to transformations on such data.

### BACKGROUND OF THE INVENTION

Typically, six degrees of freedom (6DoF) video, also known as immersive video, is capturing using one or more capture devices, and processed to form an idealized representation that is relatively easy to render using depth image based rendering (DIBR) techniques. The six degrees of freedom are: forward/back, up/down, left/right, yaw, pitch, and roll. A renderer may for instance convert the samples in a view to a mesh. A mesh is a collection of vertices, edges and faces that defines the shape of an object. An edge is a connection between two vertices. A vertex is a data structure that describes certain attributes, like the position of a point in 2D or 3D space, or multiple points on a surface, along with other information such as color, normal vector and texture coordinates. A face is a closed set of edges. A vertex color is a color value applied to a vertex in a mesh. The vertex color is derived from one or more video components that represent color, and whereby the vertex position is derived from one or more video components that represent depth, whereby in a conversion step view parameters are used to convert depth values to vertex positions.

This conversion step is denoted unprojection and relevant view parameters for unprojection are camera intrinsics (e.g. focal length, pixel size), and camera extrinsics (e.g. position and orientation). The ability to unproject from image samples, each sample being formed from one or more video components, to a point in a scene coordinate space, is what makes this 6DoF video.

The renderer may use a graphical processor unit (GPU) to render the mesh to a frame buffer. The renderer may select only the view that is nearest to a target viewport, or the renderer may select multiple nearby views and render each of those views to intermediate frame buffers. (A viewport is the view from a (virtual) camera, looking in the direction the camera is targeted.) To render the final frame buffer, the intermediate frame buffers are blended. It is beneficial to render from multiple views when scene objects are partially occluded in some of the views, or when objects have a view-dependent appearance.

### SUMMARY OF THE INVENTION

Accordingly, the invention seeks to preferably mitigate, alleviate or eliminate one or more of the above mentioned disadvantages singly or in any combination.

According to an aspect of the invention there is an apparatus for decoding a data signal, the apparatus comprising a receiver arranged to receive a data stream comprising: one or more image frames with multiple video components; parameters of one or more views; parameters of one or more capture devices; wherein a region of an image frame is associated with a view; wherein a view is associated with a capture device; wherein the capture device comprises one or more optical sensors; wherein an optical sensor is associated with a video component.

There are multiple kinds of capture devices for immersive video, based on different physical principles. In general, such capture devices acquire image data that have undesirable aspects due to the construction or calibration of the capture device. These undesirable aspects are often intrinsic to the physical principles and undesirable aspects are expected to persist even as capture technology progresses. Ignoring undesirable aspects typically results in a lowered rendering performance, especially when synthesizing a novel view point from captured view points. It will typically require extensive processing using computer vision techniques to transform the captured data into a pure multiview format that is suitable for high-quality rendering.

For instance, to compute a depth map a capture device may have two optical sensors with some spacing in between. Another optical sensor may be used to capture a color image. While it is beneficial in the context of immersive video to have a capture device that outputs both a color image and a depth image, it is a disadvantage that there is parallax between the color and depth image. In a multiview representation with two video components whereby one video component represents color, and another video component represents depth, it is useful, and typically expected, that the two video components share the same intrinsic and extrinsic camera parameters, as if recorded by a single optical sensor. One advantage of that is that there is a direct relationship between the image samples of the video component that corresponds to color, and the image samples of the video component that corresponds to depth.

It is advantageous for the decoder to receive the immersive video data in a multiview format even when there are undesirable aspects. However, to enable high-quality rendering, it is advantageous to also receive information about the capture devices that were used to capture the immersive video data. It is especially advantageous for the decoder to receive information on the optical sensors within those capture devices. The output of the decoder comprising this information is more suitable for synthesizing novel viewports.

In telepresence applications the server may be a mobile device that does not have sufficient capabilities to process the data in order to bring it in a suitable form for encoding and transmitting the data as multiview + depth data.

In archival applications, such as surveillance and cultural heritage, it is desirable to preserve the original data for future processing. It may be that in the future better methods to process the data become available. Furthermore, only a small subset of the archived data may be retrieved, and it may not be necessary to process all data. Even if the data will be retrieved, it may still be acceptable to process the data at a later stage, after the data has been archived.

Besides novel view synthesis, other uses of the decoded immersive video data are scene understanding whereby the scene is characterized by the capture data. For instance, the data may be captured by a robotic explorer and the decoded data is used as input for scientific experiments. It is advantageous when information on the undesirable aspects is output by the decoder, because it will make the scientific experiments more accurate.

It would be advantageous if information on the capture device is present in the data signal and received by the decoder because it more accurately represents the captured scene. It specifically allows for the decoded data to be used as the input for a processor that compensates for one or more of the undesirable aspects.

According to an optional feature of the invention, the capture device is afflicted with one or more undesirable aspects, and the apparatus comprises a processor arranged to compensate for at least one of the undesirable aspects.

It is advantageous for the decoder to receive the immersive video data including information on undesirable aspects that were caused due to for example mechanical construction, electronic circuits and the physical principles that were exploited for the acquisition of image data, because without information on the undesirable aspects, it is difficult or even not possible to accurately reconstruct or render the immersive video data.

Preferably, the decoder comprises a processor to compensate for at least one of the undesirable aspects, because without that undesirable aspect it will make the output of the decoder easier to use for subsequent actions such as 6DoF rendering. In general, the more undesirable aspects are compensated for, the more general the output of the decoder will be, and the more use it will have. When there are no undesirable aspects in the output of the decoder, then the output of the decoder has an idealized immersive video format that has general applicability.

According to an optional feature of the invention, the apparatus comprises a transmitter; wherein the processor and the transmitter are (mutually) coupled; wherein the transmitter outputs a signal that compensates for at least one of the undesirable aspects.

In some applications both sides of a transmission channel have resource constraints in terms of compute power, memory, battery consumption and/or network bandwidth. In this scenario, both the encoder that is part of a server, and the decoder that is part of a client, may be incapable of processing immersive video data to reduce the undesirable aspects. This will cause a degraded experience, for instance when rendering the immersive video data to a viewport.

However, it may be that another network node such as a cloud server is available and has sufficient resources. Such a node may favorably function as a transcoder of the immersive video data by decoding the data, processing it to remove one or more undesirable aspects, and transmitting the compensated data.

It is advantageous for a decoder with a processor to be coupled to a transmitter, because it will enable the resource-constrained client to receive the compensated immersive video data from the transcoder, instead of from the server, because the decoded data signal from the transcoder provides an improved representation of the scene.

Transcoders are especially useful in telepresence applications whereby a few mobile nodes act both as servers that capture image data and clients that render image data, because the mobile nodes can be coupled through a cloud service, and the cloud service may provide transcoder nodes that offload the processing to compensate for the undesirable aspects.

Transcoders are also useful in (live) broadcast scenarios whereby one or more servers are coupled to many clients. By offloading the processing of undesirable aspects to one or more transcoders, the infrastructure and operating cost can be shared between multiple productions. Furthermore, the amount of equipment that needs to be installed on location will reduce.

According to an aspect of the invention there is an apparatus for encoding a data signal, the apparatus comprising a transmitter arranged to transmit a data stream comprising: one or more image frames with multiple video components; parameters of one or more views; parameters of one or more capture devices; wherein a region of an image frame is associated with a view; wherein a view is associated with a capture device; wherein the capture device comprises one or more optical sensors; wherein an optical sensor is associated with a video component.

In a multi-view representation the physical cameras are replaced with (logical) camera models that typically represent an idealized camera with a sensor plane and an ideal lens. This is called a pinhole model and the equations that relate a point in scene space to a position on the sensor plane is called perspective projection. There are other examples of idealized camera models such as equirectangular projection and orthographic projection.

In such a multi-view representation there is the concept of (deep) image frames that have multiple video components. For instance, an image frame may have a color component and a depth component. An image frame may also have other components such as transparency or reflectance information. It is also not necessary that an image frame always has a color component and a depth component. Some components like color itself comprise multiple channels. Color typically consists of a red (R), green (G) and blue (B) channel, or alternatively as one luma (Y) and two chroma channels (C_{B}, C_{R}).

In some immersive video data formats, there is an indirection between view parameters and video components, making it possible to associate image regions with views. In such a format it possible to transmit one or more image frames whereby each image frame has multiple image regions, whereby an image region is associated with a view. That view is associated with parameters. Such a generalized image frame is denoted an image atlas, and the advantage is that it is possible to transmit only relevant parts of multiple views. Given an available budget in terms of luma sample rate, luma sample count or bit rate, it is possible to transmit more views, when it is possible to omit parts of views that are similar with the same parts in other views.

In other more restricted immersive video data formats, the image regions are constrained to have the same size as the image frame, and each image frame represents only one view. In such a format the image region is implicitly present and it is enough to associate the view with the image frame.

It is advantageous for the encoder to transmit an immersive video data stream that comprises multiple views with multiple video components, because it is more efficient to do so. Other immersive/volumetric (6DoF) data formats such as dynamic point clouds, dynamic meshes or neural representations may require more processing to transform the captured data to the transmittable form. With a multiview format, multiple capture devices can be coupled to video encoders, and the resulting coded video data can be combined with metadata to form an immersive video data signal that is suitable for 6DoF rendering.

It is especially advantageous for the encoder to transmit an immersive video data stream that comprises information on the one or more capture devices that were used to capture the image data that was used to form the immersive video data stream, because it will enable a client to compensate for the undesirable aspects of the capture devices, while it enables the encoder to avoid the processing of the undesirable aspects. This will enable a client to form an accurate representation of a captured scene, while reducing the amount of resources that the encoder needs. It may for instance reduce the number of CPU cycles, or reduce the memory consumption, or reduce outbound network bandwidth.

The capture device may be afflicted with one or more undesirable aspects. A view may be associated with the capture device; wherein the view parameters of the view comprise acquisition parameters; wherein the acquisition parameters are associated with an acquisition aspect. It is advantageous to associate a view with a capture device because the data signal represents generic immersive video data, and the acquisition parameters are additional information. A large proportion of the parsing and decoding processes are the same as for generic immersive video data.

Furthermore, it is possible that there are multiple capture devices of the same model. By associating a view with a capture device, it is determined which acquisition parameters need to be signaled for each view. Hereby a view corresponds to a capture device which is an instance of the capture device model. Some acquisition parameters are the same for all capture devices of the same capture device model, and these acquisition parameters may be signaled only once, while other acquisition parameters may be (slightly) different for multiple capture devices of the same capture device model, and this acquisition parameters are signaled for each view. If there are multiple capture device models, then it may be that the acquisition parameters that are signaled per model and/or per view are unique to a capture device model.

In other words, by associating a view with a capture device and associating a view with acquisition parameters that depend on the capture device, an efficient transmission is achieved that is also practical in terms of implementation effort. Any optimizations to the encoding of immersive video in general will naturally become available to the encoding of immersive video data comprising undesirable (acquisition) aspects.

According to an aspect of the invention there is a data signal comprising: one or more image frames with multiple video components; parameters of one or more views; parameters of one or more capture device models; wherein a region of an image frame is associated with a view; wherein a view is associated with a capture device; wherein the capture device comprises one or more optical sensors; wherein an optical sensor is associated with a video component.

An immersive video data signal may be represented by multiple video components plus metadata. Multiple video components form a (deep) image frame. There may be more than one of such image frames. Image regions of the image frame are associated with a view. For some representations the image region is the entire image frame, but it may be that each view is formed by multiple smaller image regions. In this way it is possible to transmit partial views.

In a practical acquisition a view is captured by a capture device, and the capture device has multiple optical sensors. The characteristics and physical acquisition principle of these optical sensors, plus any processing within the capture device on the output of these sensors, will typically result in undesirable acquisition aspects. Examples of those are presented in the present patent application.

It is advantageous to describe (that's to say have a data signal that comprises information) the optical sensors and related undesirable acquisition aspects because it will result in a more accurate description of the captured scene. Furthermore, it may not be possible to compensate for these aspects directly after capturing. It may be beneficial to postpone any processing to compensate for the undesirable acquisition aspects until later in a transmission chain, or later in time by storing a data signal that includes information on the optical sensors and undesirable acquisition aspects.

The capture device model may comprise one or more undesirable aspects. It is then advantageous that the one or more optical sensors comprises a first optical sensor and a second optical sensor; and one of the undesired parameters is an indication that an extrinsic camera parameter of the first optical sensor is different from (a corresponding parameter of the) the second optical sensor.

A physical principle that may be used to sense a depth value is parallax, also called triangulation, whereby the same scene is captured from two (slightly) different perspectives. The shift of scene elements from one sensor to the other may be measured and converted to a distance. Examples of capture device types/classes that exploit the parallax effect are passive stereo, active stereo and structured light. These inherently have a first optical sensor and a second optical sensor or a light source.

Furthermore, in some devices separate optical sensors are used for color information and depth information, because it is advantageous to optimize each of the sensors for their separate use. These optical sensors have to be placed next to each other, thus causing parallax.

Therefore, there may be a data signal comprising multiple video components associated with a view, and captured by two optical sensors within a capture device that is associated with the view, whereby there is a parallax between the two optical sensors. This results in a shift of scene objects that is likely to cause rendering artifacts when not corrected.

It is advantageous for the data signal to comprise extrinsic camera parameters of the first optical sensor and the second optical sensor when for the capture device (instance, model or class) there may be parallax.

According to an optional feature of the invention, the capture device is a depth camera that comprises a light source, and the parameters of the capture device comprise extrinsic parameters of the light source.

A problem in camera devices that use the parallax principle to measure depth, is that scene elements (pixels) on the two optical sensors have to be matched and typically there is some ambiguity in that. Active sensors reduce this problem by having a light source that projects a pattern onto the scene objects. In structure light class of devices, the pattern is detected on an optical sensor and the shift of the pattern in respect to a reference is used to estimate a depth value for each element of the pattern. In active stereo class of devices, the pattern is detected by multiple optical sensors and it is used to reduce the ambiguity by introducing additional texture on the scene objects.

In both cases, and possibly also for other classes of current or future capture devices, it is advantageous to know the relative position of the light source or light sources because the quality of the depth estimation depends on the projection of the pattern. It may for instance be that one side of scene objects is better estimated than another side.

According to an optional feature of the invention, the capture device has an infrared image sensor, and the infrared image sensor is associated with a video component.

Light sources as described above typically emit non-visible light to avoid disturbing the scene for human observers. Infrared light just outside of the visible range e.g. 800-900 nm is most common but other wavelengths such as UV could be used as well. A capture device that use one or more light sources and one or more non-visible light optical sensors to measure depth values has a processor, typically implemented in ASIC or FPGA, to estimate parallax and derive depth values.

It is advantageous for the data signal to comprise infrared video components because the receiving node may have more resources and process the non-visible light image more accurately.

It is especially advantageous for the data signal with multiple views and capture devices to have multiple non-visible light images because it enables a processor to consider all images when estimating depth which will typically result in a more accurate estimate. Such a processor has more information than the processor in a single capture device.

According to an optional feature of the invention, a video component is associated with an optical sensor of the one or more optical sensors; and the video component indicates depth confidence values of a depth estimation process.

A capture device that has a processor to estimate depth values may use multiple sequential image exposures to estimate depth values. Such a capture device will output an aggregate of the multiple measurements such as the mean or median depth estimate. Within such a capture device it is possible to estimate a depth confidence by studying the inconsistency in the multiple measurements of a depth value. The inconsistency may for instance be modelled by the standard deviation of the depth value estimate. Such a depth confidence may be used within the capture device to filter (e.g. by "inpainting") unconfident samples by deriving values from neighboring samples that are more confident.

It is advantageous for the data signal to comprise a video component that is associated with an optical sensor of the one or more optical sensors, that indicates depth confidence values for the depth values that are derived from that optical sensor, because it will enable another processor to improve the quality of the immersive video data. Such a processor may for instance benefit from having multiple views captured by multiple depth cameras to perform a better inpainting. Alternatively a processor may ignore such samples when another view has more confident samples of the same scene region.

According to an optional feature of the invention, a parameter of an optical sensor is coded relative to a parameter of a view.

Typically capture devices are placed separated from each other to cover an entire scene using a limited number of devices. Each capture device may for instance be 100-150 mm wide and placed 1 m apart. Within the capture device multiple optical sensors are placed closely to each other. Other parameters of the optical sensors such as focal length will typically be aligned to make images of the multiple optical sensors more equivalent. Thus, it is likely that any camera parameters of the optical sensors including camera intrinsics, camera extrinsics and distortion parameters are similar. The view is an idealized (pinhole) model of the optical sensors and has camera extrinsics and camera intrinsics that are similar to those of the optical sensors.

It is advantageous to encode a parameter of an optical sensor relative to a parameter of a view, because it is expected that the difference (delta) between the parameter is a smaller number than the parameter itself, and it requires less bits (less entropy) to encode such a difference. Furthermore, it may be that the delta parameters such as relative camera extrinsics being expressed as a translation and rotation, are the same for multiple camera devices of the same model, and signaling such a shared parameter only once will further reduce the bity rate.

According to an optional feature of the invention, the capture device is a camera that comprises an inertial motion unit; and the parameters of the capture device comprise inertial motion unit data.

Often camera devices are placed on sturdy stands (e.g. tripods) or otherwise mounted to avoid movement and vibrations. Typically, camera devices are rigid boxes with multiple optical and electronical components mounted to one or more sub-frames. However, practical materials such as metal and plastic allow for some flexibility because otherwise a camera device or its mounting would be to brittle and it may break during regular use. Some camera devices comprise an inertial motion unit (IMU) such as an accelerometer and/or gyroscope to detect movements.

It is advantageous for the data signal to comprise inertial motion unit data because that data can be used by a processor to perform a better online calibration of the camera parameters.

According to an optional feature of the invention, the parameters of a capture device comprise one or more acquisition artifact indications, whereby the acquisition artifact comprises one or more of: having a sensor with rolling shutter, having transcoded video data, having nominal (non-calibrated) camera parameters, having a lack of synchronization between the sensors of a capture device, having a lack of synchronization with other capture devices.

Ideally image data of multiple views is captured at the exact same time instance because that makes it easy to render from multiple views. Typically, it is simply assumed that this is the case. When a video component that is derived from one optical sensor is out-of-sync with another video component that is derived from another optical sensor, then moving scene objects are rendered at a different position depending on how views are blended. This may cause a disturbing visual artifact. Especially for sports applications with a lot of motion, it is beneficial to synchronize the optical sensors.

However, it may not always be possible or advantageous to do so. For instance, it may be cheaper or less work to install, to have multiple capture devices that are not synchronized, or maybe such capture devices are only synchronized with an accuracy of one or a few frames delay.

In such a scenario it is advantageous for the data signal to comprise an indication of the lack of synchronization because it may be possible to compensate for this after transmission of the data signal. Conversely, if it is signaled that synchronization is accurate then it is known that no such compensation is needed, and thus these resources can be saved.

When it is not possible to compensate for this, then subsequent processing that would be erroneous without accurate synchronization, can be avoided and if needed an appropriate error indication may be provided.

According to an optional feature of the invention, the parameters of an optical sensor comprise one or more acquisition artifact models, whereby the acquisition artifact model comprises one or more of: lens aberration, sensor temperature, sensor age, production batch identification, rolling shutter timing.

Some undesirable acquisition aspects can be compensated for when sufficient information on these aspects is provided. It is thus advantageous to provide information on such aspects including but not limited to lens aberration, sensor temperature, sensor age, production batch identification and rolling shutter timing, because a data signal that comprises these parameters provides a more accurate scene representation.
According to an optional feature of the invention, the capture device model comprises an indication of the range sensing principle; wherein the range sensing principle comprises one of: passive stereo, active stereo, structured light, time of flight, light detection and ranging (LiDAR), a combination of any of the above.

The undesirable acquisition aspects often result from the construction of the device and the physical principle that was used to capture color and/or depth information. Compensation for such undesirable aspects benefits from knowing which principle was employed because it will enable using a specific strategy to compensate for the undesirable acquisition aspects.

According to an aspect of the invention there is a method for decoding a data signal, the method comprising: receiving one or more image frames with multiple video components; receiving parameters of one or more views; receiving parameters of one or more capture devices; receiving parameters of one or more optical sensors; associating a region of an image frame with a view; associating a view with a capture device; associating a capture device with one or more optical sensors; associating an optical sensor with a video component.

The capture device may be afflicted with one or more undesirable aspects. The method comprises: compensating for at least one of the undesirable aspects.

According to an aspect of the invention there is a method for encoding a data signal, the method comprising: transmitting one or more image frames with multiple video components; transmitting parameters of one or more views; transmitting parameters of one or more capture devices; transmitting parameters of one or more optical sensors; associating a region of an image frame with a view; associating a view with a capture device; associating a capture device with one or more optical sensors; associating an optical sensor with a video component.

The invention also provides a computer program carrier comprising computer program code which, when executed on a computer, causes the computer to perform all of the steps according to any of the afore-mentioned methods.

The computer program carrier may comprise computer memory (e.g., random-access memory), computer storage (e.g., hard drives, solid-state drives etc.). The computer program carrier may be a bitstream carrying the computer program code.

The invention also provides a system comprising a processor configured to perform all of the steps according to any of the methods provided by the invention as described above.

The invention also provides computer-implemented methods comprising all of the steps according to any of the methods provided by the invention as described above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates how multiple depth sensing capable devices are used to capture a single scene according to the prior art; and
Fig. 2: illustrates how multiple capture devices may be used to form a single data signal that is transmitted to a client, according to the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

In the following the words "connected", "connection" or the like are used by way of example instead of the words "coupled", "coupling" or the like. This is because in the technical field words like "connected" or the like are the more usually used words. It is however to emphasized that in the context of this application the use of the words "connected" or the like does not mean that it can only be directly connected but that "connected" or the like also comprise "connected through something else" like e.g. a medium (like air) or some interface, like buffers, amplifiers, etcetera.

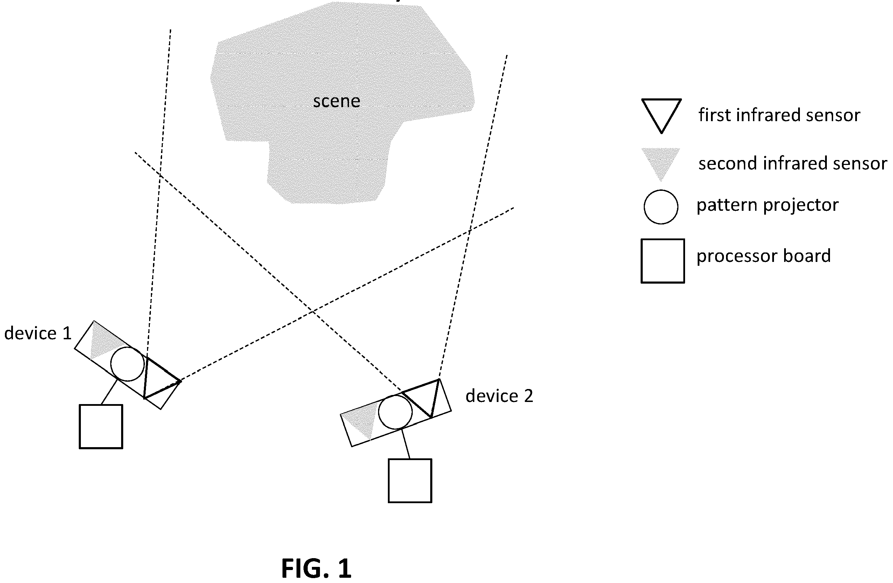

Fig. 1 illustrates how multiple depth sensing capable devices are used to capture a single scene according to the prior art It is representative for the currently available Intel RealSense depth sensors based on active stereo. The processor board that is connected to each sensor receives a so- called raw depth map that is calculated using stereo matching between a first and a second infrared sensor. For the Intel Realsense module, this stereo estimation step is done on ASIC in the device (not on the processor board).

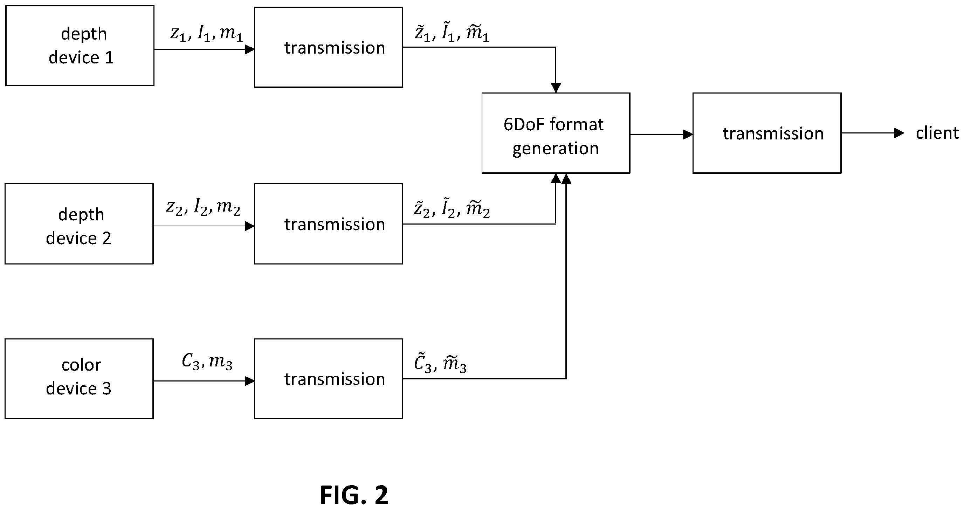

Fig. 2 illustrates how multiple capture devices may be used to form a single data signal that is transmitted to a client, according to the invention.

It is to be noted that in contrast to e.g. Intel that provides software that can improve the depth map using post-filtering on a connected host computer, in the present invention this process is delayed to after transmission to a more powerful computer that is also able to combine the data from multiple sensors in order to improve this process. In the present invention the processor board is suitable for real-time and low-latency transmission of the depth data to a computer that will refine depth and produce a 6DoF data stream.

Each depth camera capture device sends both a raw depth map (z_1, z_2) either encoded linearly e.g. in raw mm (8-bit or higher) or encoded as inverse depth. Besides the depth map, also the infrared maps (I_1, I_2) of the corresponding viewpoints are send to a 6DoF format generator. While these have already been used to estimate depth inside each single device (using the first and second infrared sensor), they are now useful to refine depth using cross device depth refinement. Starting from the initial depth map that each separate device has estimated, the combination of the infrared images over cameras can further improve the overall quality of each depth map. For this depth map refinement step, it is necessary to know whether or not the processor board that was connected to each device already did depth undistoriton or not and whether or not depth filtering operations were already applied to the data. This information is transmitted via metadata (m_1, m_2). Metadata (m_1, m_2) can also indicate nominal pose information on how each device is placed relative to a common world space. This can for example help to speed-up a pose calibration procedure that will be run by the 6DoF format generator.

Next to the depth sensor devices, Fig. 2 also shows a color sensor device 3. This device sends color with metadata where the meta data can indicate whether or not the color sensor type is rolling or global shutter. There may be color sensor devices 4, 5, .. N (not indicated in Fig. 2) in which case the color sensor shutter type (rolling or global) is relevant. If multiple color sensors are global shutter type then these can be used for depth refinement based on matching.

Various other methods for encoder or decoding data signal with capture device information are possible.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data. Any method described herein may be computer-implemented, where computer-implemented means that the steps of said methods are performed by one or more computers and where a computer is defined as a device suitable for processing data. A computer may be suitable for processing data according to prescribed instructions.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

It is noted that the invention is relevant and technically related to the current and future updates of a standard for the transmission of immersive video data according to ISO/IEC 23090-12 MPEG immersive video (MIV). At the moment of writing, the first edition of this standard is to be published in 2023, and the second edition of this standard is at working draft stage.

A data signal according to the standard consists of a sequence of so-called V3C units. A V3C unit comprises a header and a payload. The first V3C unit is called the V3C parameter set (VPS) and its use is for a decoder to either initialize or stop. All following V3C units form multiple sub-bitstreams whereby the V3C unit header identifies the sub-bitstream and the payload comprises a part of the bits of the video sub-bitstream.

There are sub-bitstreams comprising coded video components, sub-bitstreams comprising so-called atlas data, and there is a sub-bitstream comprising so-called common atlas data. The common atlas data comprises view parameters for multiple views. One of the view parameters is a numerical view identifier (view ID). The atlas data comprises patch parameters. A patch as described by its parameters associates a rectangular image region of an atlas frame with a rectangular image region in the projection plane of a view. One of the patch parameters is the projection ID which forms an association between the patch and one of the decoded views through its view ID.

In an embodiment of this invention that is provided as an example, this standard is extended to comprise associations between views and capture device models, with capture device models comprising one or more optical sensors, and optical sensors being associated with a video component.

The VPS MIV extension is part of the VPS and is extended with a "vme_capture_device _information_present _flag" to optionally signal capture device information. The flag may be used to form a sub-profile. Decoders (clients) that are only capable of decoding (and rendering) of an immersive video data without undesirable acquisition aspects, can decide based on this flag if the bitstream must be decoded, or not.

| | |
|---|---|
| vps_miv_extension( ) { | **Descriptor** |
| **vme_geometry_scale_enabled_flag** | u(1) |
| **vme embedded_occupancy_enabled flag** | u(1) |
| if( !vme_embedded_occupancy_enabled_flag) | |
| **vme_occupancy_scale enabled flag** | u(1) |
| group_mapping( ) | |
| **vme_capture_device_information_present_flag** | u(1) |
| if( vme_capture_device_information_present_flag ) | |
| capture_device_information( ) | |
| } | |

The capture device information syntax structure provides a relevant subset of parameters that are useful to initialize the decoder. The information may also be used to initialize a processor that is suitable to compensate for one or more undesirable acquisition aspects. In this example it is possible to associate multiple views with one capture device model by signaling a device model ID. The model class is signaled using an enumeration of specified values, e.g. 0=unknown, 1=single color camera, 2=passive stereo camera, 3 = active stereo camera, etc. The sensor count is indicated, and for each sensor a parallax ID is indicated. In this example when multiple optical sensors have the same parallax ID, then they are modelled as having no parallax. It may be that the optical sensors are coaxial. It may be that a single physical optical sensor is modelled as two optical sensors.

| | |
|---|---|
| capture_device_information( ) { | **Descriptor** |
| **cdi_device_model_count_minus1** | ue(v) |
| for( m = 0; m <= cdi_device_model_count_minus1; m++) { | |
| **cdi_device_model_id**[ m ] | u(6) |
| **cdi_device_model_class_id**[ m ] | ue(v) |
| **cdi_optical_sensor_count_minus1**[ m] | ue(v) |
| **cdi_intra_sensor_parallax_flag**[ m ] | u(1) |
| **cdi_light_source_count**[ m ] | ue(v) |
| **cdi_infrared_image_present_flag**[ m ] | u(1) |
| } | |
| } | |

The common atlas data may repeat some of the above syntax elements in the common atlas sequence parameter set (CASPS) to avoid a parsing dependency between the VPS and the common atlas sub-bitstream. For brevity, in this example the above syntax elements are used directly without repeating them in CASPS.

The camera extrinsics of a view v may be extended to signal additional parameters in the MIV view parameters list. Similarly, the capture device parameters may be updated in the same way that in MIV it is possible to provide view parameter updates.

| | |
|---|---|
| miv_view_params_list( ) { | **Descriptor** |
| **mvp_num_views_minus1** | u(16) |
| (...) | |
| for( v = 0; v <= mvp_num_views_minus1; v++ ) { | |
| camera_extrinsics( v, 0, 0 ) | |
| (...) | |
| if( vme_capture_device_information_present_flag ) { | |
| **mvp_device_model_id[** v ] /* associate this view with a capture device model ^{∗}/ | u(6) |
| m = CameraModelIdx[ mvp_devicemodel_id[ v ] ] | |
| for( p = 0; p < cdi_optical_sensor_count_minus1[ m ]; s++ ) { | |
| if( cdi_intra_sensor_parallax_flag[ m ] ) | |
| camera_extrinsics( v, 1, p ) | |
| distortion_parameters( v ) | |
| } | |
| for( s = 0; s < cdi_light_source_count[ m ]; s++ ) { | |
| camera_extrinsics( v, 2, s ) | |
| } | |
| (...) | |
| } | |
| } | |
| | |
| (...) | |
| } | |

It should be understood that besides syntax, the standard would also be extended with suitable semantics and decoding processes. In particular, there may be decoder processes (ISO/IEC 23090-12 Clause 9) that output variables and arrays based on the syntax elements that were present or inferred.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

Any methods described herein exclude a method for performing mental acts as such.

## Claims

1. An apparatus for decoding a data signal, the apparatus comprising a receiver arranged to receive a data stream comprising:
one or more image frames with multiple video components;
parameters of one or more views;
parameters of one or more capture devices;
wherein a region of an image frame is associated with a view;
wherein a view is associated with a capture device;
wherein the capture device comprises one or more optical sensors;
wherein an optical sensor is associated with a video component.

2. The apparatus of claim 1;
wherein the capture device is afflicted with one or more undesirable aspects;
wherein the apparatus comprises a processor arranged to compensate for at least one of the undesirable aspects.

3. The apparatus of claim 2;
wherein the apparatus comprises a transmitter;
wherein the processor and the transmitter are mutually coupled;
wherein the transmitter outputs a signal that compensates for at least one of the undesirable aspects.

4. An apparatus for encoding a data signal, the apparatus comprising a transmitter arranged to transmit a data stream comprising:
one or more image frames with multiple video components;
parameters of one or more views;
parameters of one or more capture device models;
wherein a region of an image frame is associated with a view;
wherein a view is associated with a capture device model;
wherein the capture device model comprises one or more optical sensors;
wherein an optical sensor is associated with a video component.

5. The apparatus of claim 4;
wherein the capture device model comprises one or more undesirable aspects;
wherein a view is associated with the capture device model;
wherein the view parameters of the view comprise acquisition parameters;
wherein the acquisition parameters are associated with the acquisition aspect.

6. A data signal comprising:
one or more image frames with multiple video components;
parameters of one or more views;
parameters of one or more capture device models;
wherein a region of an image frame is associated with a view;
wherein a view is associated with a capture device model;
wherein the capture device model comprises one or more optical sensors;
wherein an optical sensor is associated with a video component.

7. The data signal of claim 6;
wherein the capture device model comprises one or more undesirable aspects;
wherein the one or more optical sensors comprises a first optical sensor and a second optical sensor;
wherein one of the undesired parameters is an indication that an extrinsic camera parameter of the first optical sensor is different from (a corresponding parameter of the) the second optical sensor.

8. The data signal of claims 6 or 7;
wherein the capture device is a depth camera that comprises a light source, and wherein the parameters of the capture device comprise extrinsic parameters of the light source.

9. The data signal of any of claims 6 to 8, wherein the capture device has an infrared image sensor, and wherein the infrared image sensor is associated with a video component.

10. The data signal of any of claims 6 to 9;
comprising a video component associated with an optical sensor of the one or more optical sensors;
wherein the video component indicates depth confidence values of a depth estimation process.

11. The data signal of any of claims 6 to 10;
wherein a parameter of an optical sensor is coded relative to a parameter of a view.

12. The data signal of claims 6 to 11;
wherein the capture device is a camera that comprises an inertial motion unit;
wherein the parameters of the capture device comprise inertial motion unit data.

13. The data signal of claims 6 to 12;
wherein the parameters of a capture device comprise one or more acquisition artifact indications, whereby the acquisition artifact comprise one or more of:
having a sensor with rolling shutter,
having transcoded video data,
having nominal (non-calibrated) camera parameters,
having a lack of synchronization between the sensors of a capture device,
having a lack of synchronization with other capture devices.

14. The data signal of claims 6 to 13, wherein the parameters of an optical sensor comprise one or more acquisition artifact models, whereby the acquisition artifact model comprise one or more of:
lens aberration,
sensor temperature,
sensor age,
production batch identification,
rolling shutter timing,

15. The data signal of claims 6 to 14, wherein the capture device model comprises an indication of the range sensing principle;
wherein the range sensing principle comprises one of:
Passive stereo,
Active stereo,
Structured light,
Time of flight,
Light detection and ranging (LiDAR),
a combination of any of the above.

16. A method for decoding a data signal, the method comprising:
receiving one or more image frames with multiple video components;
receiving parameters of one or more views;
receiving parameters of one or more capture devices;
receiving parameters of one or more optical sensors;
associating a region of an image frame with a view;
associating a view with a capture device;
associating a capture device with one or more optical sensors;
associating an optical sensor with a video component.

17. The method of claim 16;
wherein the capture device is afflicted with one or more undesirable aspects; wherein the method comprises:
compensating for at least one of the undesirable aspects.

18. A method for encoding a data signal, the method comprising:
transmitting one or more image frames with multiple video components;
transmitting parameters of one or more views;
transmitting parameters of one or more capture devices;
transmitting parameters of one or more optical sensors;
associating a region of an image frame with a view;
associating a view with a capture device;
associating a capture device with one or more optical sensors;
associating an optical sensor with a video component.

19. A computer program carrier comprising computer program code which, when executed on a computer, causes the computer to perform all of the steps according to any of claims 16-18.

20. A system comprising a processor configured to perform all of the steps according to any of claims 16-18.
